# EUROPEAN PATENT SPECIFICATION

(11) **EP 0 802 041 B1**
(45) Date of publication and mention of the grant of the patent: **19.09.2001**
(21) Application number: 97830143.0
(22) Date of filing: 25.03.1997
(51) Int. Cl.: B29D 31/515

(54) **Injection moulding process for soles in expansible and crosslinking "EVA" based compounds**
Verfahren und EVA-Spritzgussmasse für die Herstellung von Sohlen
Procédé et composé EVA de moulage par injection pour la manufacture de semelles moulées

(30) Priority: 19.04.1996 IT AN960007
(43) Date of publication of application: 22.10.1997
(73) Proprietor: Finproject - S.P.A., Roma (IT)
(72) Inventor: Bisconti, Bruno, Contrada Cavallino (IT)
(74) Representative: Baldi, Claudio

(56) References cited:
- WO-A-83/03528
- FR-A- 2 628 300
- US-A- 5 352 105

## Description

This patent application concerns an injection moulding process for soles in expansible and cross-linking "EVA" based compounds.

The patent protection is also extended to the sole obtained with the process according to the invention.

The abbreviation "EVA" refers to "vinyl-acetate ethylene copolymer" which, according to the type of additive used, may be thermoplastic or expansible and cross-linking.

In the case of the latter type, an expanding powder additive is used which decomposes at a specific temperature to produce gases which give rise to a typical phenomenon which occurs in injection moulding using this type of "EVA", consisting of the instantaneous expansion of the part as soon as the mould is opened.

In particular the dimensions of the part increase rapidly while the proportions and shape remain unaltered thus maintaining a ratio of perfect similarity with the impression of the matrix.

Expansible and cross-linking "EVA", thanks above all to its low cost, is widely used in the footwear sector for the production of inexpensive injection moulded soles.

It is not however currently possible with this material to mould soles with a raised trim along the sides since the expansion of the part when the mould is opened requires the perimeter of the sole to be milled in order to reduce the sole to the necessary dimensions.

In other words, since it is not possible to control this expansion precisely, it is currently necessary to dimension - according to the expansion ratio of the material and that of its shrinkage during cooling - the impression of the mould so that the cooled moulded sole is slightly oversized with respect to the nominal dimensions of the sole sizes in question, which are obtained by milling away a surface layer of material along the entire perimeter of the sole.

It is thus obvious why this material and moulding system can not be used for soles which have a raised trim, such as a welt, a part or all of which would be removed when the sides of the sole are milled.

FR 2 628 300 patent refers to a moulding process for soles produced with thermoplastic synthetic material, such as PVC; said soles are provided with an insert made of soft and light material produced with EVA, which is housed in a suitable housing provided, if necessary, on the upper surface of the sole.

The above mentioned process is characterised in that said EVA insert is located inside said housing immediately after the mould is opened, when the sole is still hot, so that said insert firmly remains embedded in its housing thanks to the simple shrinkage of the PVC during the cooling phase of the sole.

Therefore, the above mentioned French patent describes a process in which the insert has a function which is completely different from that of the template applied in the process according to the invention.

As a matter of fact, in the French patent the insert is destined to remain embedded inside the sole and the cooling of the PVC is exploited in order to embed said insert into its housing, without the necessity of applying other fixing means, such as adhesives.

In the moulding process according to the invention, instead, the template only serves for preventing the spontaneous shrinkage of the sole, until the sole itself has become completely cold and has reached a stable position; after that, the template itself must be detached from the sole in order to be used again during the subsequent moulding phase.

In the French patent the sole is moulded in PVC, while the insert is made of soft and light EVA, since said insert must constitute the supporting surface of the foot.

In the moulding process according to the invention, instead, the sole is made of soft and light EVA, while the template must consist of a thin flexible plate made of rigid material.

The rigidity of the material is imposed by the condition that the template must not lose its shape when it is dosed inside the perimeter edge of the sole in process of cooling, so that the template can efficaciously prevent the shrinkage of the sole.

At the same time, said template must be flexible since it must be moulded in order to become similar to the profile of the upper surface of the sole and then it must be placed over the sole, inside the above mentioned perimeter edge.

This means that, once a rigid material has been chosen, one has to use a plate made of said rigid material whose thickness is thin enough to make the plate flexible.

For example, the template in question should consist of a thin plate of PVC. In conclusion, said French patent does not include any teaching concerning the way of controlling the shrinkage of a sole moulded in expansible and cross-linking EVA, during the cooling phase, since the sole described in said patent is moulded in PVC which is a material that, during the shrinkage, behaves in a way which completely differs from that of the expansible and cross-linking EVA.

The purpose of this invention is to design an injection moulding process for soles made of expansible and cross-linking "EVA" that makes it possible to produce a perfectly sized sole and to eliminate the costs and limitations of the milling which is currently necessary to size soles made of expansible and cross-linking "EVA" compounds.

The process according to the invention derives from an idea for a solution which is, in general terms, exactly opposite to that on which current production techniques are based.

According to this innovative idea, based on the expansion ratio of the material and that of its shrinkage during cooling, the impression of the mould is designed so that the moulded sole is slightly undersized after cooling and shrinkage with respect to the nominal dimensions of the size in question, which are however strictly respected by arresting the spontaneous shrinkage of the sole during cooling.

For this purpose, the process according to the invention involves the use of a template consisting of a thin and flexible plate of rigid material placed during cooling so as to adhere on the moulded sole which in turn has a raised perimeter edge along its upper surface, that surrounds and holds the edge of the template before cooling is completed, thereby preventing additional shrinkage of the sole whose dimensions reduce no further either during or after cooling.

For major clarity the description of the process according to the invention continues with reference to the enclosed drawings which are intended for purposes of illustration and not in a limiting sense and which schematically show the moulded sole before and after shrinkage following cooling, whereby:
- fig. 1 is a cross-section along a longitudinal plane of the sole injected with expansible and cross-linking "EVA" compounds immediately off the mould in maximum expansion dimensions;
- fig. 2 is a top view of the sole in fig. 1 on which the template designed to arrest the spontaneous shrinkage of the sole during the post-moulding cooling stage, is placed;
- fig. 3 is a cross-section of the sole in fig. 2 along a longitudinal plane III-III;
- fig. 4 is a cross-section along a longitudinal plane of the sole according to the invention at the stage in which the perimeter edge of the sole and template join, during the spontaneous shrinkage phase;
- fig. 5 is a cross-section along a longitudinal plane of the sole produced with the moulding system according to the invention.

Before describing the operating stages of the moulding process according to the invention, it is important to remember that in order to realise the process according to the invention, the moulding system must be designed to ensure that the sole off the mould after complete and spontaneous shrinkage is slightly undersized with respect to the nominal dimensions of the size in question. Moreover the impression of the mould must be designed so that the sole off the mould, regardless of its shape or pattern of the treading surface and sides, has a raised perimeter edge on its upper surface.

This being so, the actual moulding process is attained according to current technology by injecting granules of expansible and cross-linking "EVA" compound into a mould, maintained at a specific temperature to ensure that during the time the material remains in the mould, cross-linking and decomposition of the expanding filler, occur.

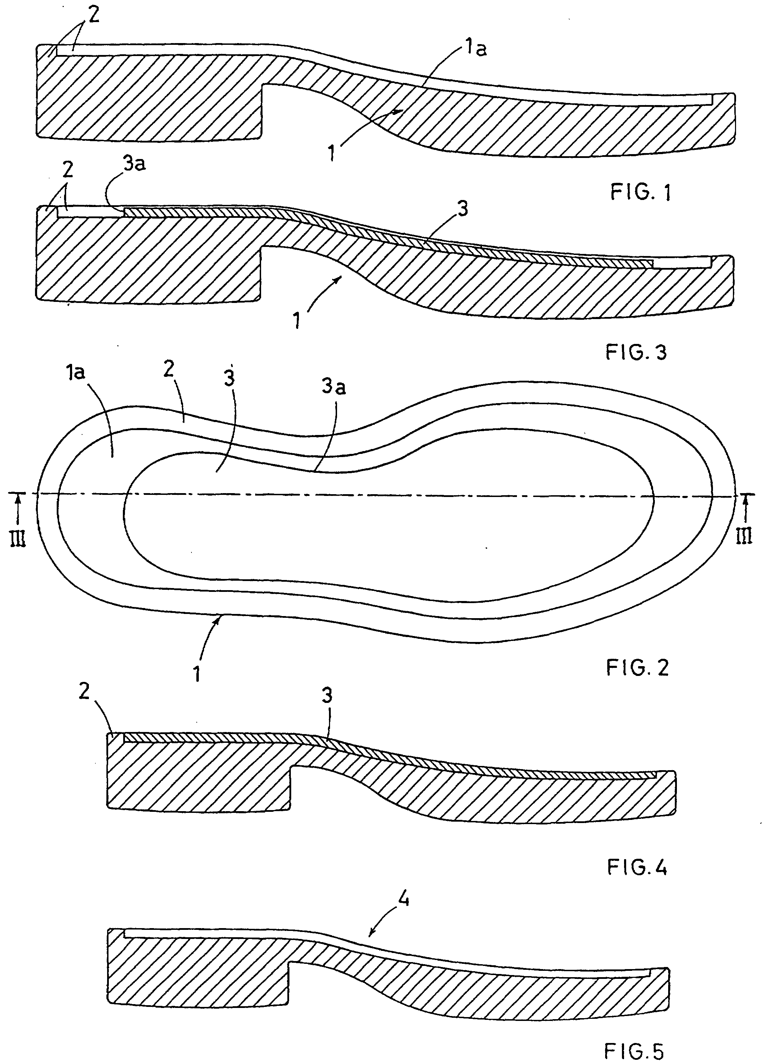

This conventional moulding phase produces a sole of the type illustrated in figure 1 which, as mentioned above, shows the sole in the maximum dimensions of expansion, that the sole attains immediately the mould is opened.

As can be seen in figure 1, sole (1) is characterised by a raised perimeter edge (2) along its upper surface (1a).

According to the process in question, a template (3) is placed on the sole (1) before cooling is completed, said template consisting of a thin flexible plate made of rigid material such as rigid PVC, having a profile similar to that of the sole (1) but sized to fit into the perimeter edge (2), which, before completion of the cooling process, encircles and holds the edge (3a) of said template (3), so as to prevent additional shrinkage of the sole whose dimensions reduce no further either during or after cooling.

After cooling, template (3) is prised off the edge (2) by which it is encircled.

The sole (4) thus obtained, is shown in fig. 5, with the same shape but reduced dimensions with respect to the sole (1) shown in figure 1.

The dimensions of the template (3) must therefore be sized to ensure that the shrinkage of the sole (1), during cooling, is stopped when the dimensions of the sole correspond exactly to the nominal dimensions of the sole size in question.

Finally, in order to ensure adhesion of the template (3) on the sole (1), the process according to the invention provides that a pressure be created on the template, during cooling, by suitable means, the most convenient and simplest of which may consist of small weights placed on the template (3).

## Claims

1. An injection moulding process for soles produced with expansible and cross-linking "EVA" based compounds; said process applies a mould whose impression is shaped so that the moulded sole has a raised perimeter edge (2) on its upper surface; said process having the steps:
- expansible and cross-linking "EVA" based compound granules are injected into a mould whose impression is sized to ensure that the sole (1) after spontaneous and complete shrinkage, is slightly undersized with respect to the nominal dimensions of the sole size in question.
- a template (3), consisting of a thin flexible plate made of a material having rigidity comparable to rigid PVC, said template having a profile similar to that of the sole (1) but sized to fit into the perimeter edge (2), is placed on the upper surface of the sole (1) before cooling is completed;
- said template (3) remains in said edge (2) until cooling is completed;
- the template (3) is extracted from the sole after cooling.

2. A process according to the previous claim **characterised in that** the template (3) is subject to a pressure in order to ensure adhesion on the upper surface of the sole (1) in the perimeter edge (2).

3. An injection moulded sole made of expansible and cross-linking "EVA" compounds produced with the process according to the previous claims.

## Patentansprüche

1. Verfahren zum Spritzgießen von Sohlen aus schäumbarer und vernetzbarer "EVA"-Verbindung, in welchem eine Spritzgussform verwendet wird, deren Abdruck ein derartiges Profil aufweist, dass die spritzgegossene Sohle auf ihrer Oberseite einen umlaufenden, erhöhten Rand (2) besitzt, welches Verfahren folgende Phasen umfasst:
- Einspritzen von schäumbarem und vernetzbarem "EVA"-Granulat in eine Spritzgussform, deren Abdruck so dimensioniert ist, dass die Sohle (1) bei freier und vollständiger Rückstellung nach der Entnahme aus der Spritzgussform gegenüber den Nominalmaßen der jeweiligen Schuhgröße leicht unterbemessen wäre;
- Auflegen einer Schablone (3) auf der Oberseite der Sohle (1), bevor der Abkühlprozess völlig abgeschlossen ist, welche Schablone (3) aus einer dünnen Schicht eines flexiblen Materials besteht, dessen Steifigkeit in etwa der von Hart-PVC entspricht, wobei die Schablone ein ähnliches Profil wie das Fußbett der Sohle (1) besitzt, aber so bemessen ist, dass sie innerhalb des zuvor besagten umlaufenden Randes (2) eingelegt werden kann.
- Belassen der besagten Schablone (3) innerhalb des besagten Randes (2) bis zum Ende der Abkühlphase;
- Herausnehmen der besagten Schablone (3) aus der Sohle nach Beendigung des Abkühlvorgangs;

2. Verfahren gemäß vorstehendem Anspruch, **dadurch gekennzeichnet, dass** die Schablone (3) so aufgepresst wird, dass sie auf der Oberseite der Sohle (1) innerhalb des umlaufenden Randes (2) einrastet.

3. Spritzgegossene Sohle aus schäumbarer und vernetzbarer "EVA"-Verbindung, die mittels eines den obigen Ansprüchen entsprechenden Verfahrens hergestellt wird.

## Revendications

1. Procédé de moulage par injection de semelles réalisées avec des composés à base de "EVA" expansible et apte à la réticulation; procédé qui prévoit l'utilisation d'un moule, dont l'empreinte est profilée de manière telle que la semelle moulée présente en correspondance de sa face supérieure, un petit bord de périmètre rehaussé (2); procédé dont les phases sont les suivantes:
- l'injection de granules de composés à base de "EVA" expansible et apte à la réticulation dans un moule dont l'empreinte est dimensionnée de manière telle que la semelle (1), si laissée librement et entièrement retirer après avoir été démoulée du moule, atteint des dimensions légèrement inférieures par rapport à celles nominales de la pointure de référence ;
- le déploiement au-dessus de la face supérieure de la semelle (1), avant que ne s'accomplisse le procédé de refroidissement, d'un gabarit (3) consistant en une mince feuille flexible réalisée en un matériel dont la rigidité peut être comparée à celle du PVC rigide, ledit gabarit présentant un profil similaire à celui de la plante de la semelle (1), mais dont les dimensions sont telles qu'il peut être largement logé à l'intérieur du susdit petit bord de périmètre (2);
- la permanence du ledit gabarit (3) dans ledit petit bord (2) jusqu'à la phase complète de refroidissement ;
- l'extraction du ledit gabarit (3) enfilé dans la semelle, lorsque le refroidissement est terminé.

2. Procédé selon la revendication précédente, **caractérisé en ce qu'**il prévoit que le gabarit (3) est sujet à une pression, apte à en garantir le placement au-dessus de la face supérieure de la semelle (1) à l'interne du petit bord de périmètre (2).

3. Semelle moulée par injection dans des composés à base de "EVA" expansible et apte à la réticulation, réalisée selon le procédé dont aux revendications précédentes.
